# EUROPÄISCHE PATENTSCHRIFT

(11) **EP 4 049 407 B1**
(45) Veröffentlichungstag und Bekanntmachung des Hinweises auf die Patenterteilung: **27.08.2025**
(21) Anmeldenummer: 20792594.2
(22) Anmeldetag: 12.10.2020
(51) Int. Cl.: H04L 9/08, H04L 9/32

(54) **VERFAHREN UND SYSTEM ZUR LIZENZIERUNG UND SCHLÜSSELÜBERGABE FÜR SENSOREN UND EMPFÄNGER**
METHODS AND SYSTEM FOR LICENSING AND DELIVERING KEYS FOR SENSORS AND RECEIVERS
PROCÉDÉS ET SYSTÈME D'OCTROI DE LICENCE ET DE DISTRIBUTION DE CLÉS POUR DES CAPTEURS ET DES RÉCEPTEURS

(30) Priorität: 25.10.2019 DE 102019007447
(43) Veröffentlichungstag der Anmeldung: 31.08.2022
(73) Patentinhaber: Diehl Metering Systems GmbH, 90451 Nürnberg (DE)
(72) Erfinder: FENDT, Charles, 90547 Stein (DE); SCHMIDT, Achim, 91367 Weißenohe (DE)
(74) Vertreter: Diehl Patentabteilung
(86) Internationale Anmeldenummer: PCT/EP2020/078644
(87) Internationale Veröffentlichungsnummer: WO 2021/078567

(56) Entgegenhaltungen:
- WO-A1-2013/020172
- US-A- 5 970 147
- US-A1- 2017 168 777
- US-A1- 2019 245 701

## Beschreibung

Die vorliegende Erfindung betrifft ein Verfahren zur Lizenzierung eines Sensors an einer zentralen Stelle gemäß Anspruch 1, ein Verfahren zur Lizenzierung eines Empfängers an einer zentralen Stelle gemäß Anspruch 3, ein Verfahren zur Bereitstellung einer Liste von Sensor-Schlüsseln durch eine zentrale Stelle gemäß Anspruch 6 und ein Verfahren zur Registrierung eines lizenzierten Sensors an einem lizenzierten Empfänger gemäß Anspruch 9, sowie ein System zur Übertragung von Daten von einem lizenzierten Sensor an einen lizenzierten Empfänger gemäß Anspruch 17.

### Technologischer Hintergrund

Einige Transporttechnologien, wie z. B. MIOTY, rechnen auf Basis gerätebezogener Lizenzen ab. Teilnehmer mit individueller Verschlüsselung benötigen eine sichere Schlüsselübergabe. Dabei sind sowohl Sensoren, die als Sender agieren, als auch Empfänger, die die Aufgaben von Datenprozessoren übernehmen, zu lizenzieren. Die Übertragung von Transportschlüsseln, die für den Daten- und Nachrichtenaustausch verwendet werden, erfolgt dabei als Klartext.

Das Elliptic Curve Integrated Encryption Scheme (ECIES) ist ein hybrides Verschlüsselungsverfahren, dem elliptische Kurven zugrunde liegen. Als Hybridverfahren kombiniert es ein asymmetrisches Verfahren, das zum Versenden eines symmetrischen Schlüssels benutzt wird, mit einem symmetrischen Verschlüsselungsverfahren, das mit diesem symmetrischen Schlüssel die Nachricht verschlüsselt. Für eine asymmetrische Verschlüsselung kann ein Verschlüsselungsverfahren, welches auf elliptischer Kurven-Kryptografie (Elliptic Curve Cryptography, ECC) beruht, verwendet werden.

Die US 2017/0168777 A1 offenbart ein Internet-of-Things (loT)-Netzwerk mit einer Vielzahl von loT-Geräten, welche mit einem loT-Knotenpunkt kommunizieren und ein integriertes Entwicklungswerkzeug für ein loT-System.

### Aufgabe der vorliegenden Erfindung

Die Aufgabe der vorliegenden Erfindung besteht darin, ein neuartiges Verfahren zur Lizenzierung und Schlüsselübergabe für Sensoren und Empfänger sowie ein System zur Übertragung von Daten zur Verfügung zu stellen, bei dem bei einer gleichzeitigen Lizenzierung und Schlüsselübergabe eine erhöhte Sicherheit bei erhöhter Flexibilität ermöglicht wird.

### Lösung der Aufgabe

Die vorstehende Aufgabe wird durch die gesamte Lehre des Anspruchs 1, des Anspruchs 3, des Anspruchs 6 und des Anspruchs 9 sowie durch ein System gemäß Anspruch 17 gelöst. Zweckmäßige Ausgestaltungen der Erfindung sind in den Unteransprüchen beansprucht.

Erfindungsgemäß ist ein Verfahren zur Lizenzierung eines Sensors an einer zentralen Stelle vorgesehen, wobei dieses den Sensor, die zentrale Stelle, umfassend ein Computersystem und eine Datenbank, und einen Hersteller des Sensors, umfassend ein Computersystem, umfasst, wobei zwischen dem Hersteller des Sensors und der zentralen Stelle eine Datenverbindung besteht, wobei kennzeichnenderweise in der Datenbank der zentralen Stelle eine Liste von Sensor-Schlüsseln vorgehalten wird, wobei ein erstes Schlüsselpaar, bestehend aus einem privaten und einem öffentlichen Schlüssel, beim Hersteller des Sensors generiert wird, der öffentliche Schlüssel des ersten Schlüsselpaars vom Hersteller des Sensors an die zentrale Stelle übertragen wird, dem ersten Schlüsselpaar ein Bereich von Seriennummern für Sensoren zugeordnet wird, ein zweites Schlüsselpaar, bestehend aus einem privaten und einem öffentlichen Schlüssel, bei der zentralen Stelle generiert wird, der öffentliche Schlüssel des zweiten Schlüsselpaars von der zentralen Stelle an den Hersteller des Sensors übertragen wird, dem zweiten Schlüsselpaar der Bereich von Seriennummern für Sensoren zugeordnet wird, der öffentliche Schlüssel des ersten Schlüsselpaars, der private Schlüssel des zweiten Schlüsselpaars und der zugeordnete Bereich von Seriennummern für Sensoren in der Liste von Sensor-Schlüsseln in der zentralen Stelle hinterlegt werden, der Hersteller des Sensors einen Übertragungsschlüssel, der zur Datenübertragung zwischen Sensor und einem Empfänger verwendet wird, mit dem privaten Schlüssel des ersten Schlüsselpaares und dem öffentlichen Schlüssel des zweiten Schlüsselpaares verschlüsselt, sowie den verschlüsselten Übertragungsschlüssel im Sensor hinterlegt, und der Hersteller des Sensors im Sensor den privaten Schlüssel des ersten Schlüsselpaares und den öffentlichen Schlüssel des zweiten Schlüsselpaares hinterlegt oder den Übertragungsschlüssel zusätzlich unverschlüsselt hinterlegt.

Das erfindungsgemäße Verfahren ermöglicht es, einen Übertragungsschlüssel in einem Sensor so verschlüsselt zu hinterlegen, dass einerseits der Sensor auf diesen Übertragungsschlüssel zugreifen kann bzw. diesen entschlüsseln kann und andererseits einer zentralen Stelle, die beispielsweise als Lizenzierungsstelle agiert, die Schlüssel zum Entschlüsseln dieses Übertragungsschlüssels vorliegen. Aufgrund des erfindungsgemäßen Verfahrens werden hierfür vorteilhafterweise lediglich öffentliche Schlüssel zwischen den beteiligten Parteien, dem Hersteller des Sensors und der zentralen Stelle ausgetauscht. Dadurch ist das Verfahren zum Lizenzieren besonders sicher, da selbst bei einem Abfangen bzw. Abgreifen der öffentlichen Schüssel während der Übertragung durch einen Dritten, diese abgefangenen öffentlichen Schlüssel nicht ausreichend sind, um den verschlüsselten Übertragungsschlüssel zu entschlüsseln. Das Verfahren zum Lizenzieren eines Sensors ist nicht auf einen einzigen Sensor beschränkt, so dass an der zentralen Stelle eine Vielzahl von Sensoren registriert werden können. Sofern eine Vielzahl von Sensoren an der zentralen Stelle lizenziert wird, kann es von Vorteil sein, die entsprechenden Schlüssel und zugeordnete Bereiche von Seriennummern in einer Liste vorzuhalten.

Vorteilhafterweise kann der Sensor eine eindeutige ID haben, die seine eindeutige Seriennummer umfasst, die im Bereich von Seriennummern für Sensoren liegt. Über die ID des Sensors ist eine Zuordnung des Sensors zum entsprechenden Eintrag in der Liste von Sensor-Schlüsseln möglich.

Vorzugsweise kann der der Bereich von Seriennummern für Sensoren im Zuge einer Lizenz von der zentralen Stelle dem Hersteller des Sensors zugeordnet werden. Die zentrale Stelle verkauft beispielsweise eine Lizenz an den Hersteller des Sensors für einen Bereich von Seriennummern für Sensoren. Sensoren, deren Seriennummern in diesen Bereich von Seriennummern für Sensoren fallen, können entsprechend dem erfindungsgemäßen Verfahren zur Lizenzierung eines Sensors an der zentralen Stelle registriert werden und somit zur Inbetriebnahme und zum Gebrauch freigeschaltet werden.

Nebengeordnet beansprucht die vorliegende Erfindung ein Verfahren zur Lizenzierung eines Empfängers an einer zentralen Stelle, wobei dieses den Empfänger, die zentrale Stelle, umfassend ein Computersystem und eine Datenbank, und einen Hersteller des Empfängers, umfassend ein Computersystem, umfasst, wobei zwischen dem Hersteller des Empfängers und der zentralen Stelle eine Datenverbindung besteht, wobei kennzeichnenderweise ein drittes Schlüsselpaar, bestehend aus einem privaten und einem öffentlichen Schlüssel, beim Hersteller des Empfängers generiert wird, der öffentliche Schlüssel des dritten Schlüsselpaars vom Hersteller des Empfängers an die zentrale Stelle übertragen wird, dem dritten Schlüsselpaar ein Bereich von Seriennummern für Empfänger zugeordnet wird, ein viertes Schlüsselpaar, bestehend aus einem privaten und einem öffentlichen Schlüssel, bei der zentralen Stelle generiert wird, der öffentliche Schlüssel des vierten Schlüsselpaars von der zentralen Stelle an den Hersteller des Empfängers übertragen wird, dem vierten Schlüsselpaar der Bereich von Seriennummern für Empfänger zugeordnet wird, der Hersteller des Empfängers im Empfänger den privaten Schlüssel des dritten Schlüsselpaars und den öffentlichen Schlüssel des vierten Schlüsselpaars hinterlegt.

Beim erfindungsgemäßen Verfahren zur Lizenzierung eines Empfängers werden vorteilhafterweise lediglich die öffentlichen Schlüssel der Schlüsselpaare zwischen dem Hersteller des Empfängers und der zentralen Stelle ausgetauscht. Dadurch ist das Verfahren zum Lizenzieren eines Empfängers ebenso besonders sicher, da selbst bei einem Abfangen bzw. Abgreifen der öffentlichen Schüssel während der Übertragung durch einen Dritten, diese abgefangenen öffentlichen Schlüssel nicht ausreichend sind, um den verschlüsselten Übertragungsschlüssel zu entschlüsseln.

Zweckmäßigerweise können in der Datenbank der zentralen Stelle eine Liste von Empfänger-Schlüsseln vorgehalten werden, wobei der öffentliche Schlüssel des dritten Schlüsselpaars, der private Schlüssel des vierten Schlüsselpaars und der zugeordnete Bereich von Seriennummern für Empfänger in der Liste von Empfänger-Schlüsseln in der zentralen Stelle hinterlegt werden. Das Verfahren zum Lizenzieren eines Empfängers ist nicht auf einen einzigen Empfänger beschränkt, so dass an der zentralen Stelle eine Vielzahl von Empfängern registriert werden können. Sofern eine Vielzahl von Empfängern an der zentralen Stelle lizenziert wird, kann es von Vorteil sein, die entsprechenden Schlüssel und zugeordnete Bereiche von Seriennummern in einer Liste vorzuhalten.

Vorteilhafterweise kann der Empfänger eine eindeutige ID haben, die seine eindeutige Seriennummer umfasst, die im Bereich von Seriennummern für Empfänger liegt. Über die ID des Empfängers ist eine Zuordnung des Empfängers zum entsprechenden Eintrag in der Liste von Empfänger-Schlüsseln möglich.

Vorzugsweise kann der Bereich von Seriennummern für Empfänger im Zuge einer Lizenz von der zentralen Stelle dem Hersteller des Empfängers zugeordnet werden. Die zentrale Stelle kann beispielsweise eine Lizenz an den Hersteller des Empfängers für einen Bereich von Seriennummern für Empfänger verkaufen. Empfänger, deren Seriennummern in diesen Bereich von Seriennummern für Empfänger fallen, können entsprechend dem erfindungsgemäßen Verfahren zur Lizenzierung eines Empfängers an der zentralen Stelle registriert werden und somit zur Inbetriebnahme und zum Gebrauch freigeschaltet werden.

Nebengeordnet beansprucht die vorliegende Erfindung weiterhin ein Verfahren zur Bereitstellung einer Liste von Sensor-Schlüsseln durch eine zentrale Stelle, unter Anwendung des Verfahrens zur Lizenzierung eines Sensors nach Anspruch 1 oder 2 und des Verfahrens zur Lizenzierung eines Empfängers nach einem der Ansprüche 3 bis 5, wobei kennzeichnenderweise die zentrale Stelle die Liste von Sensor-Schlüsseln mit dem öffentlichen Schlüssel des dritten Schlüsselpaars und dem privaten Schlüssel des vierten Schlüsselpaars verschlüsselt. Die Liste von Sensor-Schlüsseln kann somit von der zentralen Stelle bezogen werden. Allerdings kann die Liste von Sensor-Schlüsseln lediglich von Parteien entschlüsselt werden, die über die entsprechenden Schlüssel verfügen. Empfänger, die gemäß dem erfindungsgemäßen Verfahren zur Lizenzierung eines Empfängers an der zentralen Stelle lizenziert sind, können beispielsweise die verschlüsselte Liste von Sensor-Schlüsseln entschlüsseln. In der Liste von Sensor-Schlüsseln sind wiederum die Einträge der Sensoren, welche beispielsweise gemäß dem erfindungsgemäßen Verfahren zur Lizenzierung eines Sensors an der zentralen Stelle lizenziert sind.

Besonders vorteilhaft ist es, dass die zentrale Stelle die Liste von Sensor-Schlüsseln mit dem öffentlichen Schlüssel des dritten Schlüsselpaars und dem privaten Schlüssel des vierten Schlüsselpaars eines jeden Empfängers, dessen Schlüssel in der Liste von Empfänger-Schlüsseln hinterlegt ist, verschlüsselt. Da das Verfahren zum Lizenzieren eines Empfängers nicht auf einen einzigen Empfänger beschränkt ist, kann die Liste von Sensor-Schlüsseln vorteilhafterweise für jeden lizenzierten Empfänger, der beispielsweise gemäß dem erfindungsgemäßen Verfahren zur Lizenzierung eines Empfängers an der zentralen Stelle lizenziert ist, verschlüsselt werden. Somit können alle lizenzierten Empfänger in die Lage versetzt werden, die verschlüsselte Liste von Sensor-Schlüsseln zu entschlüsseln und die entsprechenden Sensor-Schlüssel extrahieren. Andererseits können damit auch alle nicht lizenzierten Empfänger vom Zugriff auf die Sensor-Schlüssel ausgeschlossen sein.

Zweckmäßigerweise kann die zentrale Stelle die Liste von Sensor-Schlüsseln veröffentlichen. Sofern eine Vielzahl von Empfängern lizenziert ist, kann die Liste von Sensor-Schlüsseln mit den entsprechenden Empfängern-Schlüsseln verschlüsselt werden und in einer Vielzahl von Versionen, die mit unterschiedlichen Empfänger-Schlüsseln verschlüsselt sind, veröffentlicht werden.

Es besteht zudem die Möglichkeit, dass die Liste von Sensor-Schlüsseln von einer Zertifizierungsstelle signiert wird. Eine Zertifizierungsstelle (CA, englisch: certificate authority oder certification authority) ist eine Einrichtung, die digitale Zertifikate ausstellt. Ein digitales Zertifikat bescheinigt das Eigentum an einem öffentlichen Schlüssel durch den genannten Gegenstand des Zertifikats. Dies ermöglicht es anderen (vertrauenswürdigen Parteien), sich auf Signaturen oder auf Aussagen über den privaten Schlüssel zu verlassen, der dem zertifizierten öffentlichen Schlüssel entspricht. Eine Zertifizierungsstelle fungiert als vertrauenswürdige dritte Partei, dem sowohl der Betreffende (Eigentümer) des Zertifikats als auch die Partei, die sich auf das Zertifikat verlässt, vertrauen.

Nebengeordnet beansprucht die vorliegende Erfindung zudem ein Verfahren zur Registrierung eines lizenzierten Sensors, wobei der lizenzierte Sensor nach dem Verfahren gemäß Anspruch 1 oder 2 lizensiert wird, an einem lizenzierten Empfänger, wobei der lizenzierte Empfänger nach dem Verfahren gemäß einem der Ansprüche 3 bis 5 lizensiert wird, unter Einbeziehung einer zentralen Stelle, wobei dieses den Sensor, den Empfänger, und die zentrale Stelle, umfassend ein Computersystem und eine Datenbank, umfasst, wobei zwischen dem Sensor und dem Empfänger eine Datenverbindung besteht, und zwischen dem Empfänger und der zentralen Stelle eine Datenverbindung besteht, wobei kennzeichnenderweise die Bereitstellung einer Liste von Sensor-Schlüsseln gemäß mindestens einem der Ansprüche 6 bis 8 erfolgt, wobei der Empfänger von der zentralen Stelle die Liste von Sensor-Schlüsseln bezieht, der Empfänger die Liste von Sensor-Schlüsseln durch den privaten Schlüssel des dritten Schlüsselpaars und den öffentlichen Schlüssel des vierten Schlüsselpaars entschlüsselt, der Sensor den hinterlegten verschlüsselten Übertragungsschlüssel an den Empfänger übermittelt, der Empfänger aus der Liste von Sensor-Schlüsseln den für den Sensor entsprechenden öffentlichen Schlüssel des ersten Schlüsselpaars und den privaten Schlüssel des zweiten Schlüsselpaars extrahiert, der Empfänger den verschlüsselten Übertragungsschlüssel durch den öffentlichen Schlüssel des ersten Schlüsselpaars und dem privaten Schlüssel des zweiten Schlüsselpaars entschlüsselt.

Es ist somit nach dem erfindungsgemäßen Verfahren zur Registrierung eines lizenzierten Sensors an einem lizenzierten Empfänger einerseits nur für lizenzierte Sensoren möglich sich an einem Empfänger zu registrieren und andererseits ist nur ein lizenzierter Empfänger in der Lage die Registrierung eines Sensors durchzuführen. Somit kann sichergestellt werden, dass sich nur lizenzierte Empfänger auf die Schlüssel von wiederum lizenzierten Sensoren zugreifen können.

Vorteilhafterweise kann der Sensor seine ID an den Empfänger senden, wobei der Empfänger gemäß der in der ID enthaltenen Seriennummer aus der Liste von Sensor-Schlüsseln die Schlüssel extrahiert, die diesem Bereich von Seriennummern für Sensoren zugeordnet sind.

Besonders vorteilhaft ist es, dass der Sensor mit dem Übertragungsschlüssel verschlüsselte Daten an den Empfänger sendet, und der Empfänger die verschlüsselten Daten durch den Übertragungsschlüssel entschlüsselt. Durch die Registrierung des Sensors am Empfänger ist der Empfänger in der Lage mittels des entschlüsselten Übertragungsschlüssels die übermittelten Daten des Sensors zu entschlüsseln.

Vorteilhafterweise kann der Übertragungsschlüssel, der zur Datenübertragung zwischen Sensor und Empfänger verwendet wird, ein symmetrisches Verschlüsselungsverfahren beschreiben. Für die Übertragung von Daten zwischen dem Sensor und dem Empfänger kann ein symmetrischer Schlüssel verwendet werden.

Vorzugsweise kann es sich bei der ID des Sensors und/oder bei der ID des Empfängers um eine MAC-Adresse handeln. Die ID kann somit beispielsweise auf dem Standard EUI-64 (64-Bit Extended Unique Identifier) basieren. Es können beispielsweise die ersten 24 Bit den Hersteller identifizieren. Durch die ersten 48 Bit oder 56 Bit können beispielsweise Bereiche von Seriennummern für Sensoren und/oder Bereiche von Seriennummern für Empfänger identifiziert werden. Die letzten 16 Bit oder 8 Bit können beispielsweise die Seriennummern von Sensoren und/oder die Seriennummern von Empfängern identifizieren. Somit kann zweckmäßigerweise der Bereich von Seriennummern für Sensoren von der ID oder der MAC-Adresse des Sensors bestimmt werden und/oder der Bereich von Seriennummern für Empfänger von der ID oder der MAC-Adresse des Empfängers bestimmt werden.

Besonders zweckmäßig ist es, dass das erste Schlüsselpaar und/oder das zweite Schlüsselpaar und/oder das dritte Schlüsselpaar und/oder das vierte Schlüsselpaar ein asymmetrisches Verschlüsselungsverfahren beschreibt. Ferner besteht die Möglichkeit, dass die zu jedem Schlüsselpaar gehörigen öffentlichen und privaten Schlüssel jeweils, unabhängig voneinander, anders herum verteilt werden. Somit könnte es sich bei dem jeweiligen privaten Schlüssel um einen öffentlichen Schlüssel handeln, und bei dem jeweiligen öffentlichen Schlüssel um einen privaten Schlüssel.

Für die Generierung des ersten Schlüsselpaares und/oder des zweiten Schlüsselpaares und/oder des dritten Schlüsselpaares und/oder des vierten Schlüsselpaares können Zufallszahlen verwendet werden. Beispielsweise können Zufallszahlen erzeugt werden, die den privaten Schlüssel des entsprechenden Schlüsselpaares bilden und entsprechend zur Generierung des jeweils öffentlichen Schlüssels verwendet werden.

Der Übertragungsschlüssel kann somit selbst ein symmetrischer Schlüssel sein, der bei seiner Übertragung zwischen Sensor und Empfänger mit einem asymmetrischen Schlüssel verschlüsselt ist. Darüber hinaus können die Schlüssel zur Entschlüsselung des verschlüsselten Übertragungsschlüssels wiederum verschlüsselt übertragen werden. In dem Falle können die Schlüssel zur Entschlüsselung in der Liste von Sensor-Schlüsseln hinterlegt sein, die wiederum verschlüsselt ist. Diese Liste von Sensor-Schlüsseln wird zwischen der zentralen Stelle und dem Empfänger verschlüsselt übertragen. Bei dieser Verschlüsselung kann es sich auch um ein asymmetrisches Verschlüsselungsverfahren handeln.

Vorteilhafterweise kann die MAC-Adresse und/oder ein Teil der MAC-Adresse des Sensors zur Erzeugung des zweiten Schlüsselpaars verwendet werden und/oder die MAC-Adresse und/oder ein Teil der MAC-Adresse des Empfängers zur Erzeugung des vierten Schlüsselpaars verwendet werden. Somit können die Bits der MAC-Adresse, welche beispielsweise die Bereiche von Seriennummern für Sensoren oder die Bereiche von Seriennummern für Empfänger identifizieren zur Erzeugung des zweiten oder vierten Schlüsselpaares verwendet werden. Dies können beispielsweise die ersten 48 Bit oder 56 Bit einer MAC-Adresse nach dem Standard EUI-64 sein. Im Zuge der Lizenzierung des Sensors oder des Empfängers können somit anhand der jeweiligen MAC-Adressen Bereiche von Seriennummern vergeben werden, wobei ein entsprechender Schlüssel durch diese MAC-Adressen oder Teile der MAC-Adressen erzeugt werden. Beispielsweise können MAC-Adressen oder Teile der MAC-Adressen zum Erzeugen von Schlüsseln nach einem asymmetrischen Verschlüsselungsverfahren, wie z. B. der elliptischen Kurven-Kryptographie, verwendet werden.

Nebengeordnet beansprucht die vorliegende Erfindung ferner ein System zur Übertragung von Daten von einem lizenzierten Sensor, wobei der lizenzierte Sensor nach dem Verfahren gemäß Anspruch 1 oder 2 lizensiert wird, an einen lizenzierten Empfänger, wobei der lizenzierte Empfänger gemäß einem der Ansprüche 3 bis 5 lizensiert wird, unter Einbeziehung einer zentralen Stelle, wobei das System den Sensor, den Empfänger, und die zentrale Stelle, umfassend ein Computersystem und eine Datenbank, umfasst, wobei zwischen dem Sensor und dem Empfänger eine Datenverbindung besteht, und zwischen dem Empfänger und der zentralen Stelle eine Datenverbindung besteht, der Sensor Daten, die mit dem Übertragungsschlüssel verschlüsselt sind, an den Empfänger sendet, der Empfänger die Daten durch den Übertragungsschlüssel entschlüsselt, wobei kennzeichnenderweise der Übertragungsschlüssel vom Sensor an den Empfänger, im Zuge einer Registrierung des Sensors am Empfänger, insbesondere einer Registrierung des Sensors am Empfänger gemäß mindestens einem der Ansprüche 9 bis 11, übermittelt wird, insbesondere nach einem Verfahren gemäß mindestens einem der Verfahrensansprüche.

Mit den Verfahren und dem System kann somit die Lizenzierung der Sensoren und der Empfänger ermöglicht werden, wobei im gleichen Zuge auch die sichere Übergabe der Übertragungsschlüssel zur Kommunikation bzw. zum Datenaustausch zwischen den Sensoren und den Empfängern sichergestellt werden kann. Der Übertragungsschlüssel kann damit vorteilhafterweise immer verschlüsselt übertragen werden und es besteht keine Notwendigkeit diesen unverschlüsselt als Klartext zu übertragen. Mit der sicheren Übergabe der Übertragungsschlüssel ermöglicht die Erfindung zudem vorteilhafterweise, ein Lizenzierungsmodell für Sensoren und Empfänger zu etablieren. Die Aushandlung zwischen Sensoren und Empfänger zur Authentifizierung der Lizenz entfällt, wodurch die erfindungsgemäßen Verfahren und das erfindungsgemäße System auch bei unidirektionaler Kommunikation vom Sensor zum Empfänger funktionieren.

### Beschreibung der Erfindung anhand von Ausführungsbeispielen

Zweckmäßige Ausgestaltungen der vorliegenden Erfindung werden anhand von Zeichnungsfiguren nachstehend näher erläutert. Es zeigen:
- Fig. 1: eine stark vereinfachte schematische Darstellung der Lizenzierung eines Sensors an einer zentralen Stelle;
- Fig. 2: eine stark vereinfachte schematische Darstellung der Lizenzierung eines Empfängers an einer zentralen Stelle und der Bereitstellung einer Liste von Sensor-Schlüsseln;
- Fig. 3: eine stark vereinfachte schematische Darstellung der Registrierung eines lizenzierten Sensors an einem lizenzierten Empfänger;
- Fig. 4: eine stark vereinfachte schematische Darstellung einer Liste von Sensor-Schlüsseln; und
- Fig. 5a-b: Aufteilungen von MAC-Adressen in Bereiche von Seriennummern.

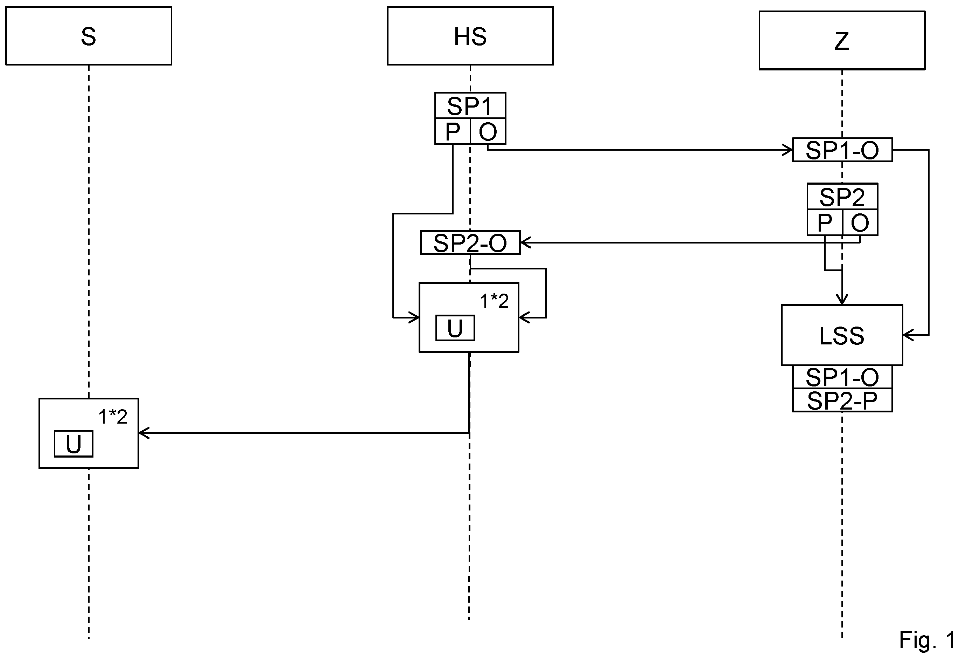

In Fig. 1 wird die Lizenzierung eines Sensors (S) an einer zentralen Stelle (Z) in einer stark vereinfachten schematischen Darstellung gezeigt. Der Hersteller des Sensors (HS) generiert in einem ersten Schritt ein erstes Schlüsselpaar (SP1), bestehend aus einem privaten (SP1-P) und einem öffentlichen (SP1-O) Schlüssel. Der öffentliche Schlüssel (SP1-O) des ersten Schlüsselpaars (SP1) wird vom Hersteller des Sensors (HS) an die zentrale Stelle (Z) übertragen. Der Hersteller des Sensors (HS) kauft eine Lizenz für einen Bereich von Seriennummern für Sensoren (SNS) von der zentralen Stelle (Z). Die zentrale Stelle (Z) erzeugt, ausgehend vom gekauften Bereich von Seriennummern für Sensoren (SNS) ein zweites Schlüsselpaar (SP2). Hierbei definieren die ersten 48-Bit der MAC-Adressen der Sensoren (S) eine Gruppe, für die das zweite Schlüsselpaar (SP2) gültig ist. Anschließend wird der öffentliche Schlüssel (SP2-O) des zweiten Schlüsselpaars (SP2) von der zentralen Stelle (Z) an den Hersteller des Sensors (HS) übertragen. Die zentrale Stelle (Z) hinterlegt danach den öffentlichen Schlüssel (SP1-O) des ersten Schlüsselpaars (SP1), den privaten Schlüssel (SP2-P) des zweiten Schlüsselpaars (SP2) und den zugeordneten Bereich von Seriennummern für Sensoren (SNS) in einer Liste von Sensor-Schlüsseln (LSS). Der Hersteller des Sensors (HS) einen Übertragungsschlüssel (U), der zur Datenübertragung zwischen Sensor (S) und einem Empfänger (E) verwendet wird, mit dem privaten Schlüssel (SP1-P) des ersten Schlüsselpaares (SP1) und dem öffentlichen Schlüssel (SP2-O) des zweiten Schlüsselpaares (SP2) verschlüsselt, und den verschlüsselten Übertragungsschlüssel (U) im Sensor (S) hinterlegt.

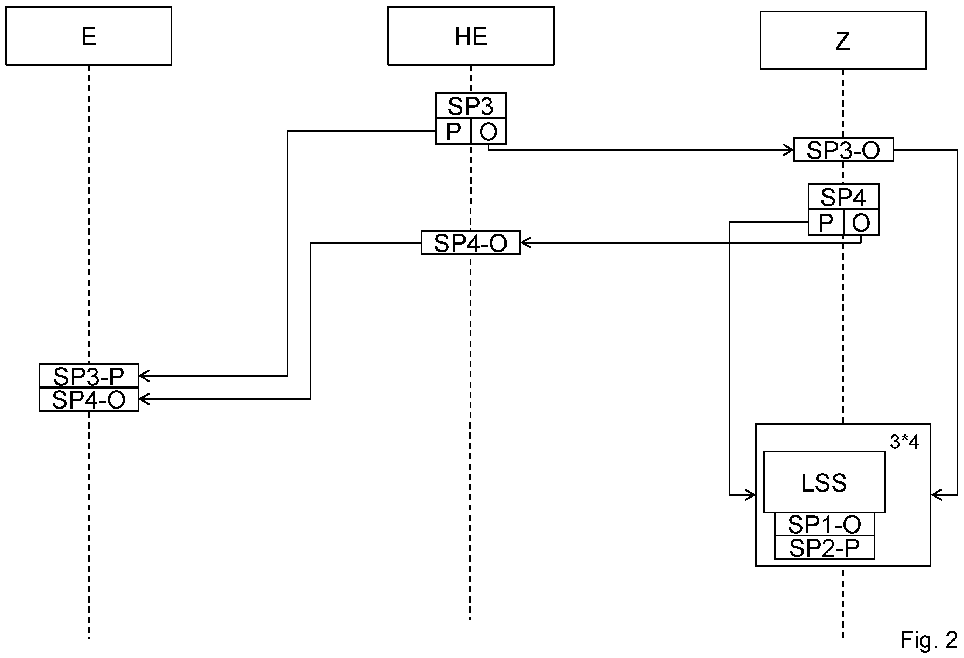

In Fig. 2 wird die Lizenzierung eines Empfängers an einer zentralen Stelle und der Bereitstellung einer Liste von Sensor-Schlüsseln in einer stark vereinfachten schematischen Darstellung gezeigt. Beim Head-End-System (HE) wird ein drittes Schlüsselpaar (SP3), bestehend aus einem privaten (SP3-P) und einem öffentlichen (SP3-O) Schlüssel erzeugt. Der öffentliche Schlüssel (SP3-O) des dritten Schlüsselpaars (SP3) wird vom Hersteller des Empfängers (HE) an die zentrale Stelle (Z) übertragen. Der Hersteller des Empfängers (HE) kauft eine Lizenz für einen Bereich von Seriennummern für Empfänger (SNE) von der zentralen Stelle (Z). Die zentrale Stelle (Z) erzeugt, ausgehend vom gekauften Bereich von Seriennummern für Empfänger (SNE) ein viertes Schlüsselpaar (SP4). Hierbei definieren die ersten 56-Bit der MAC-Adressen der Empfänger (E) eine Gruppe, für die das vierte Schlüsselpaar (SP4) gültig ist. Anschließend wird der öffentliche Schlüssel (SP4-O) des vierten Schlüsselpaars (SP4) von der zentralen Stelle (Z) an den Hersteller des Empfängers (HE) übertragen. Der Hersteller des Empfängers (HE) hinterlegt im Empfänger (E) den privaten Schlüssel (SP3-P) des dritten Schlüsselpaars (SP3) und den öffentlichen Schlüssel (SP4-O) des vierten Schlüsselpaars (SP4). Die Liste von Sensor-Schlüsseln (LSS) wird mit dem öffentlichen Schlüssel (SP3-O) des dritten Schlüsselpaars (SP3) und dem privaten Schlüssel (SP4-P) des vierten Schlüsselpaars (SP4) verschlüsselt, von einer Zertifizierungsstelle signiert und veröffentlicht.

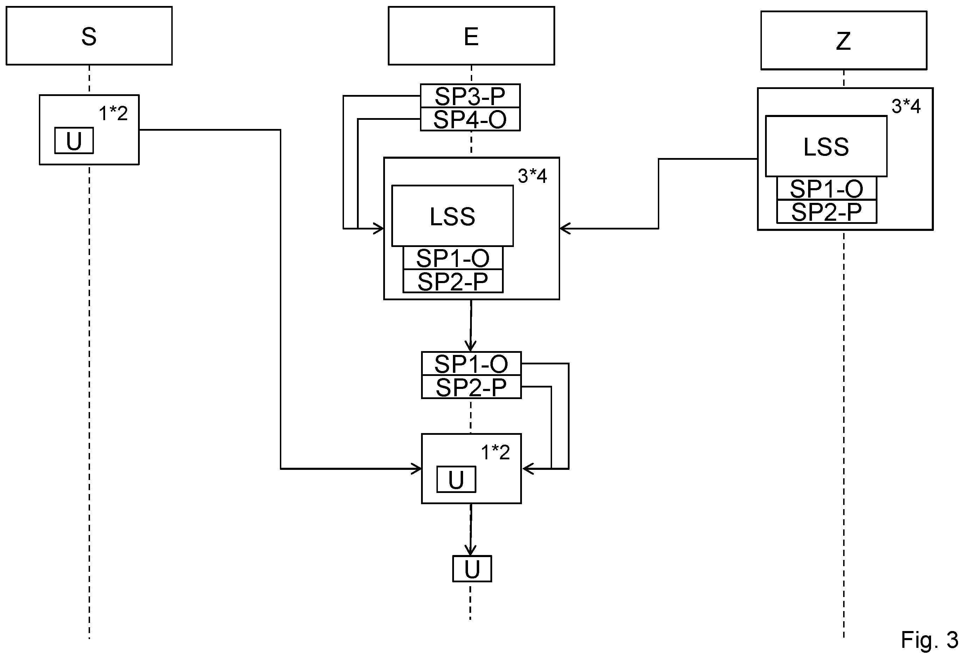

In Fig. 3 wird die Registrierung eines lizenzierten Sensors (S) an einem lizenzierten Empfänger (E) in einer stark vereinfachten schematischen Darstellung gezeigt. In einem ersten Schritt bezieht der Empfänger (E) von der zentralen Stelle (Z) die verschlüsselte Liste von Sensor-Schlüsseln (LSS). Der Empfänger (E) entschlüsselt die Liste von Sensor-Schlüsseln (LSS) durch den privaten Schlüssel (SP3-P) des dritten Schlüsselpaars (SP3) und den öffentlichen Schlüssel (SP4-O) des vierten Schlüsselpaars (SP4). Der Sensor (S) überträgt anschließend seine ID und den verschlüsselten Übertragungsschlüssel (U) an den Empfänger (E). Anhand der ID extrahiert der Empfänger (E) aus der Liste von Sensor-Schlüsseln (LSS) den für den Sensor (S) entsprechenden öffentlichen Schlüssel (SP1-O) des ersten Schlüsselpaars (SP1) und den privaten Schlüssel (SP2-P) des zweiten Schlüsselpaars (SP2). Der Empfänger (E) entschlüsselt den verschlüsselten Übertragungsschlüssel (U) durch den öffentlichen Schlüssel (SP1-O) des ersten Schlüsselpaars (SP1) und dem privaten Schlüssel (SP2-P) des zweiten Schlüsselpaars (SP2). Durch den Übertragungsschlüssel (U) kann der Empfänger (E) vom Sensor (S) gesendete verschlüsselte Daten entschlüsseln.

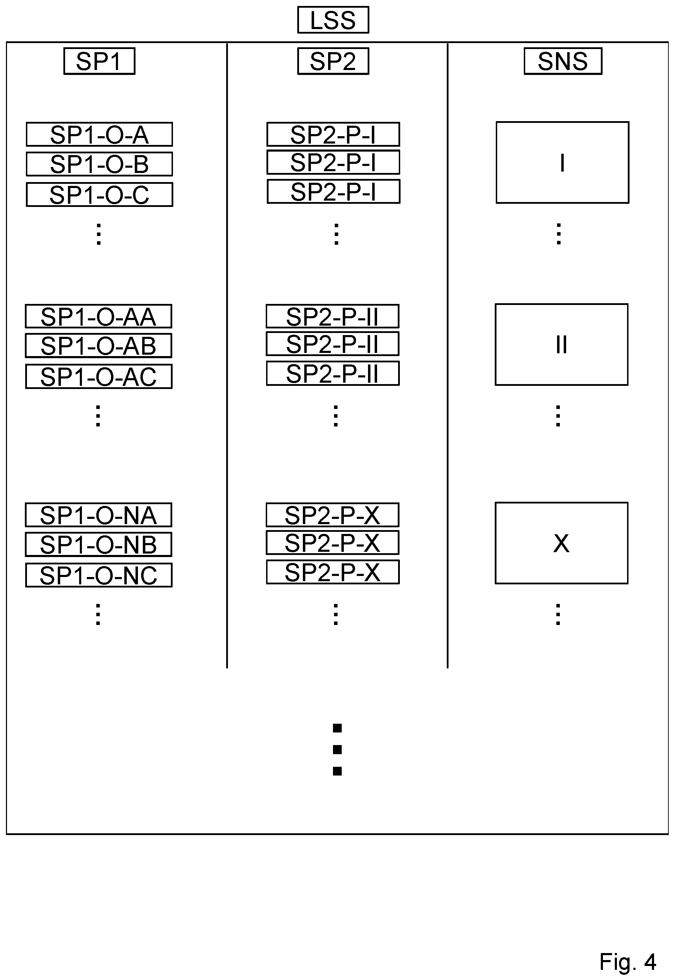

In Fig. 4 ist eine stark vereinfachte schematische Darstellung einer Liste von Sensor-Schlüsseln (LSS) gezeigt. Für eine Vielzahl von Sensoren (A - NC) sind in der Liste von Sensor-Schlüsseln (LSS) die entsprechenden öffentlichen Schlüssel (SP1-O) des ersten Schlüsselpaares (SP1) und die privaten Schlüssel (SP2-P) entsprechend der Bereiche (I - X) von Seriennummern für Sensoren (SNS) hinterlegt. So befinden sich die Seriennummern der Sensoren (A - C) im Bereich (I) von Seriennummern für Sensoren (SNS). Das zweite Schlüsselpaar (SP2) für diesen Bereich ist für diese Sensoren (A - C) in diesem Bereich identisch. Somit ist für jeden der Sensoren (A - C) der private Schlüssel (SP2-P-I) des zweiten Schlüsselpaars (SP2) hinterlegt. Die Seriennummern der Sensoren (AA - AC) befinden sich analog im Bereich (II) von Seriennummern für Sensoren (SNS) und die Seriennummer der Sensoren (NA - NC) im Bereich (X) von Seriennummern für Sensoren (SNS). Mit jedem lizenzierten Sensor (S) wird die Liste von Sensor-Schlüsseln (LSS) um einen Eintrag erweitert.

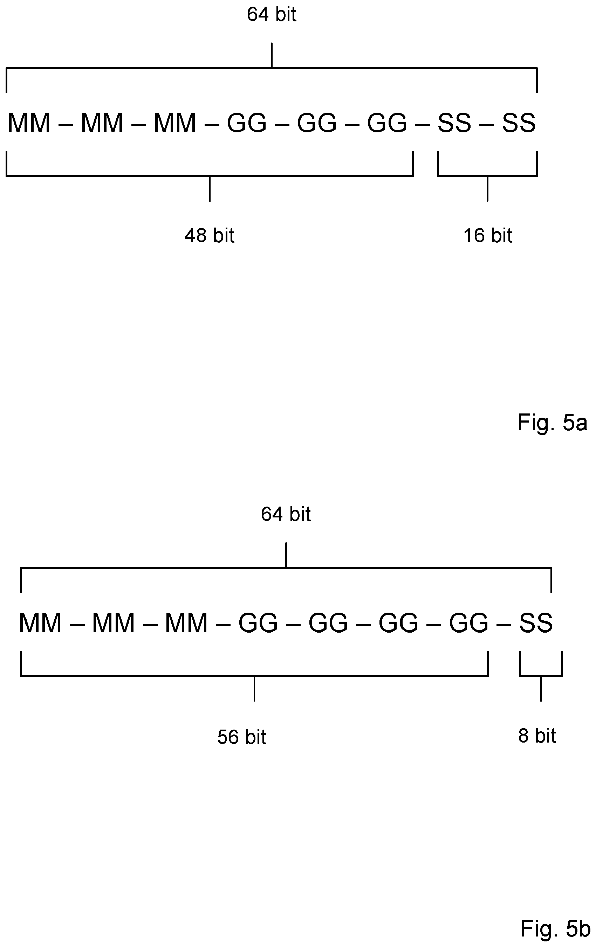

Die Fig. 5a-b zeigen Aufteilungen von MAC-Adressen in Bereiche von Seriennummern. Die MAC-Adressen weisen entsprechend dem Standard EUI-64 eine Länge von 64-Bit auf. Die MAC-Adressen sind in drei Bereich unterteilt: der Bereich MM steht für den Hersteller, der Bereich GG für die Gruppe und der Bereich SS für die Seriennummer. Die MAC-Adresse in Fig. 5a weist ein Präfix, bestehend aus Hersteller-Bereich (MM) und Gruppen-Bereich (GG) von 48 bits auf. Der Seriennummern-Bereich (SS) hat eine Länge von 16 bit und definiert damit einen Bereich von Seriennummern für Sensoren (SNS) für 2¹⁶ = 65536 Sensoren (S). Für diesen Bereich von Seriennummern für Sensoren (SNS) kann von der zentralen Stelle (Z) eine Lizenz verkauft werden. Das zweite Schlüsselpaar (SP2) kann beispielweise durch dieses Präfix definiert werden.

Die MAC-Adresse in Fig. 5b weist ein Präfix, bestehend aus Hersteller-Bereich (MM) und Gruppen-Bereich (GG) von 56 bits auf. Der Seriennummern-Bereich (SS) hat eine Länge von 8 bit und definiert damit einen Bereich von Seriennummern für Empfänger (SNE) für 2⁸ = 256 Empfänger (E). Für diesen Bereich von Seriennummern für Empfänger (SNE) kann von der zentralen Stelle (Z) eine Lizenz verkauft werden. Das vierte Schlüsselpaar (SP4) kann beispielweise durch dieses Präfix definiert werden.

### BEZUGSZEICHENLISTE

- S: Sensor
- E: Empfänger
- Z: zentrale Stelle
- HS: Hersteller des Sensors
- HE: Hersteller des Empfängers
- SP: Schlüsselpaar
- LSS: Liste von Sensor-Schlüsseln
- LES: Liste von Empfänger-Schlüsseln
- SNS: Bereich von Seriennummern für Sensoren
- SNE: Bereich von Seriennummern für Empfänger
- U: Übertragungsschlüssel

- P: privat
- O: öffentlich

- MM: Hersteller
- GG: Gruppe
- SS: Seriennummer

## Patentansprüche

1. Verfahren zur Lizenzierung eines Sensors (S) an einer zentralen Stelle (Z), umfassend
den Sensor (S),
die zentrale Stelle (Z), umfassend
ein Computersystem und eine Datenbank,
einen Hersteller des Sensors (HS), umfassend
ein Computersystem, wobei
zwischen dem Hersteller des Sensors (HS) und der zentralen Stelle (Z) eine Datenverbindung besteht,
wobei
in der Datenbank der zentralen Stelle (Z) eine Liste von Sensor-Schlüsseln (LSS) vorgehalten wird, wobei
ein erstes Schlüsselpaar (SP1), bestehend aus einem privaten (SP1-P) und einem öffentlichen (SP1-O) Schlüssel, beim Hersteller des Sensors (HS) generiert wird,
der öffentliche Schlüssel (SP1-O) des ersten Schlüsselpaars (SP1) vom Hersteller des Sensors (HS) an die zentrale Stelle (Z) übertragen wird,
dem ersten Schlüsselpaar (SP1) ein Bereich von Seriennummern für Sensoren (SNS) zugeordnet wird,
ein zweites Schlüsselpaar (SP2), bestehend aus einem privaten (SP2-P) und einem öffentlichen (SP2-O) Schlüssel, bei der zentralen Stelle (Z) generiert wird,
der öffentliche Schlüssel (SP2-O) des zweiten Schlüsselpaars (SP2) von der zentralen Stelle (Z) an den Hersteller des Sensors (HS) übertragen wird,
dem zweiten Schlüsselpaar (SP2) der Bereich von Seriennummern für Sensoren (SNS) zugeordnet wird,
der öffentliche Schlüssel (SP1-O) des ersten Schlüsselpaars (SP1), der private Schlüssel (SP2-P) des zweiten Schlüsselpaars (SP2) und der zugeordnete Bereich von Seriennummern für Sensoren (SNS) in der Liste von Sensor-Schlüsseln (LSS) in der zentralen Stelle (Z) hinterlegt werden,
der Hersteller des Sensors (HS) einen Übertragungsschlüssel (U), der zur Datenübertragung zwischen Sensor (S) und einem Empfänger (E) verwendet wird, mit dem privaten Schlüssel (SP1-P) des ersten Schlüsselpaares (SP1) und dem öffentlichen Schlüssel (SP2-O) des zweiten Schlüsselpaares (SP2) verschlüsselt, sowie den verschlüsselten Übertragungsschlüssel (U) im Sensor (S) hinterlegt, und
der Hersteller des Sensors (HS) im Sensor (S) den privaten Schlüssel (SP1-P) des ersten Schlüsselpaares (SP1) und den öffentlichen Schlüssel (SP2-O) des zweiten Schlüsselpaares (SP2) hinterlegt
oder den Übertragungsschlüssel (U) unverschlüsselt hinterlegt

2. Verfahren nach Anspruch 1, **dadurch gekennzeichnet, dass** der Sensor (S) eine eindeutige ID hat, die seine eindeutige Seriennummer umfasst, die im Bereich von Seriennummern für Sensoren (SNS) liegt, und/oder
dass der Bereich von Seriennummern für Sensoren (SNS) im Zuge einer Lizenz von der zentralen Stelle (Z) dem Hersteller des Sensors (HS) zugeordnet wird.

3. Verfahren zur Lizenzierung eines Empfängers (E) an einer zentralen Stelle (Z), umfassend
den Empfänger (E),
die zentrale Stelle (Z), umfassend
ein Computersystem und eine Datenbank,
einen Hersteller des Empfängers (HE), umfassend
ein Computersystem, wobei
zwischen dem Hersteller des Empfängers (HE) und der zentralen Stelle (Z) eine Datenverbindung besteht,
wobei
ein drittes Schlüsselpaar (SP3), bestehend aus einem privaten (SP3-P) und einem öffentlichen (SP3-O) Schlüssel, beim Hersteller des Empfängers (HE) generiert wird,
der öffentliche Schlüssel (SP3-O) des dritten Schlüsselpaars (SP3) vom Hersteller des Empfängers (HE) an die zentrale Stelle (Z) übertragen wird,
dem dritten Schlüsselpaar (SP3) ein Bereich von Seriennummern für Empfänger (SNE) zugeordnet wird,
ein viertes Schlüsselpaar (SP4), bestehend aus einem privaten (SP4-P) und einem öffentlichen (SP4-O) Schlüssel, bei der zentralen Stelle (Z) generiert wird,
der öffentliche Schlüssel (SP4-O) des vierten Schlüsselpaars (SP4) von der zentralen Stelle (Z) an den Hersteller des Empfängers (HE) übertragen wird,
dem vierten Schlüsselpaar (SP4) der Bereich von Seriennummern für Empfänger (SNE) zugeordnet wird,
der Hersteller des Empfängers (HE) im Empfänger (E) den privaten Schlüssel (SP3-P) des dritten Schlüsselpaars (SP3) und den öffentlichen Schlüssel (SP4-O) des vierten Schlüsselpaars (SP4) hinterlegt.

4. Verfahren nach Anspruch 3, **dadurch gekennzeichnet, dass** in der Datenbank der zentralen Stelle (Z) eine Liste von Empfänger-Schlüsseln (LES) vorgehalten wird, wobei der öffentliche Schlüssel (SP3-O) des dritten Schlüsselpaars (SP3), der private Schlüssel (SP4-P) des vierten Schlüsselpaars (SP4) und der zugeordnete Bereich von Seriennummern für Empfänger (SNE) in der Liste von Empfänger-Schlüsseln (LES) in der zentralen Stelle (Z) hinterlegt werden.

5. Verfahren nach Anspruch 3 oder 4, **dadurch gekennzeichnet, dass** der Empfänger (E) eine eindeutige ID hat, die seine eindeutige Seriennummer umfasst, die im Bereich von Seriennummern für Empfänger (SNE) liegt, und/oder
**dass** der Bereich von Seriennummern für Empfänger (SNE) im Zuge einer Lizenz von der zentralen Stelle (Z) dem Hersteller des Empfängers (HE) zugeordnet wird.

6. Verfahren zur Bereitstellung einer Liste von Sensor-Schlüsseln (LSS) durch eine zentrale Stelle (Z) unter Anwendung des Verfahrens nach Anspruch 1 oder 2 und des Verfahrens nach einem der Ansprüche 3 bis 5, **dadurch gekennzeichnet, dass** die zentrale Stelle (Z) die Liste von Sensor-Schlüsseln (LSS) mit dem öffentlichen Schlüssel (SP3-O) des dritten Schlüsselpaars (SP3) und dem privaten Schlüssel (SP4-P) des vierten Schlüsselpaars (SP4) verschlüsselt.

7. Verfahren nach Anspruch 6, **dadurch gekennzeichnet, dass** die zentrale Stelle (Z) die Liste von Sensor-Schlüsseln (LSS) mit dem öffentlichen Schlüssel (SP3-O) des dritten Schlüsselpaars (SP3) und dem privaten Schlüssel (SP4-P) des vierten Schlüsselpaars (SP4) eines jeden Empfängers (E), dessen Schlüssel in der Liste von Empfänger-Schlüsseln (LES) hinterlegt ist, verschlüsselt.

8. Verfahren nach Anspruch 6 oder 7, **dadurch gekennzeichnet, dass** die zentrale Stelle (Z) die Liste von Sensor-Schlüsseln (LSS) veröffentlicht und/oder
**dass** die Liste von Sensor-Schlüsseln (LSS) von einer Zertifizierungsstelle signiert wird.

9. Verfahren zur Registrierung eines lizenzierten Sensors (S), wobei der lizenzierte Sensor (S) nach dem Verfahren gemäß Anspruch 1 oder 2 lizensiert wird, an einem lizenzierten Empfänger (E), wobei der lizenzierte Empfänger (E) nach dem Verfahren gemäß einem der Ansprüche 3 bis 5 lizensiert wird, unter Einbeziehung einer zentralen Stelle (Z), umfassend
den Sensor (S),
den Empfänger (E),
die zentrale Stelle (Z), umfassend
ein Computersystem und eine Datenbank, wobei
zwischen dem Sensor (S) und dem Empfänger (E) eine Datenverbindung besteht, und
zwischen dem Empfänger (E) und der zentralen Stelle (Z) eine Datenverbindung besteht,
**dadurch gekennzeichnet, dass**
die Bereitstellung einer Liste von Sensor-Schlüsseln (LSS) gemäß einem der Ansprüche 6 bis 8 erfolgt, wobei
der Empfänger (E) von der zentralen Stelle (Z) die Liste von Sensor-Schlüsseln (LSS) bezieht,
der Empfänger (E) die Liste von Sensor-Schlüsseln (LSS) durch den privaten Schlüssel (SP3-P) des dritten Schlüsselpaars (SP3) und den öffentlichen Schlüssel (SP4-O) des vierten Schlüsselpaars (SP4) entschlüsselt,
der Sensor (S) den hinterlegten verschlüsselten Übertragungsschlüssel (U) an den Empfänger (E) übermittelt,
der Empfänger (E) aus der Liste von Sensor-Schlüsseln (LSS) den für den Sensor (S) entsprechenden öffentlichen Schlüssel (SP1-O) des ersten Schlüsselpaars (SP1) und den privaten Schlüssel (SP2-P) des zweiten Schlüsselpaars (SP2) extrahiert,
der Empfänger (E) den verschlüsselten Übertragungsschlüssel (U) durch den öffentlichen Schlüssel (SP1-O) des ersten Schlüsselpaars (SP1) und dem privaten Schlüssel (SP2-P) des zweiten Schlüsselpaars (SP2) entschlüsselt.

10. Verfahren nach Anspruch 9, **dadurch gekennzeichnet, dass** der Sensor (S) seine ID an den Empfänger (E) sendet, wobei der Empfänger (E) gemäß der in der ID enthaltenen Seriennummer aus der Liste von Sensor-Schlüsseln (LSS) die Schlüssel extrahiert, die diesem Bereich von Seriennummern für Sensoren (SNS) zugeordnet sind.

11. Verfahren nach Anspruch 9 oder 10, **dadurch gekennzeichnet, dass** der Sensor (S) mit dem Übertragungsschlüssel (U) verschlüsselte Daten an den Empfänger sendet, und der Empfänger (E) die verschlüsselten Daten durch den Übertragungsschlüssel (U) entschlüsselt.

12. Verfahren nach einem der vorhergehenden Ansprüche, **dadurch gekennzeichnet, dass** der Übertragungsschlüssel (U) ein symmetrisches Verschlüsselungsverfahren beschreibt.

13. Verfahren nach einem der Ansprüche 2 bis 12, **dadurch gekennzeichnet, dass** es sich bei der ID des Sensors (S) und/oder bei der ID des Empfängers (E) um eine MAC-Adresse handelt.

14. Verfahren nach einem der Ansprüche 2 bis 13, **dadurch gekennzeichnet, dass** der Bereich von Seriennummern für Sensoren (SNS) von der ID oder der MAC-Adresse des Sensors (S) bestimmt wird und/oder der Bereich von Seriennummern für Empfänger (SNE) von der ID oder der MAC-Adresse des Empfängers (S) bestimmt wird.

15. Verfahren nach einem der vorhergehenden Ansprüche, **dadurch gekennzeichnet, dass** das erste Schlüsselpaar (SP1) und/oder das zweite Schlüsselpaar (SP2) und/oder das dritte Schlüsselpaar (SP3) und/oder das vierte Schlüsselpaar (SP4) ein asymmetrisches Verschlüsselungsverfahren beschreibt.

16. Verfahren nach einem der Ansprüche 13 bis 15, **dadurch gekennzeichnet, dass** die MAC-Adresse und/oder ein Teil der MAC-Adresse des Sensors (S) zur Erzeugung des zweiten Schlüsselpaars (SP2) verwendet werden und/oder die MAC-Adresse und/oder ein Teil der MAC-Adresse des Empfängers (E) zur Erzeugung des vierten Schlüsselpaars (SP4) verwendet werden.

17. System zur Übertragung von Daten von einem lizenzierten Sensor (S), wobei das System dazu ausgerichtet ist, den Sensor (S) nach dem Verfahren gemäß Anspruch 1 oder 2 an einen lizenzierten Empfänger (E) zu lizenzieren, und den Empfänger (E) nach dem Verfahren gemäß einem der Ansprüche 3 bis 5 zu lizenzieren, unter Einbeziehung einer zentralen Stelle (Z), umfassend
den Sensor (S),
den Empfänger (E),
die zentrale Stelle (Z), umfassend
ein Computersystem und eine Datenbank, wobei
zwischen dem Sensor (S) und dem Empfänger (E) eine Datenverbindung besteht, und
zwischen dem Empfänger (E) und der zentralen Stelle (Z) eine Datenverbindung besteht,
der Sensor (S) Daten, die mit dem Übertragungsschlüssel (U) verschlüsselt sind, an den Empfänger (E) sendet,
der Empfänger (E) die Daten durch den Übertragungsschlüssel (U) entschlüsselt,
**dadurch gekennzeichnet, dass**
der Übertragungsschlüssel (U) vom Sensor (S) an den Empfänger (E), im Zuge einer Registrierung des Sensors (S) am Empfänger (E), insbesondere einer Registrierung des Sensors (S) am Empfänger (E) gemäß mindestens einem der Ansprüche 9 bis 11, übermittelt wird,
insbesondere nach einem Verfahren gemäß mindestens einem der vorhergehenden Ansprüche.

## Claims

1. Method for licensing a sensor (S) at a central body (Z), comprising
the sensor (S),
the central body (Z), comprising
a computer system and a database,
a sensor manufacturer (HS), comprising
a computer system, wherein
a data connection exists between the sensor manufacturer (HS) and the central body (Z),
wherein
a list of sensor keys (LSS) is kept in the database of the central body (Z), wherein
a first key pair (SP1), consisting of a private (SP1-P) and a public (SP1-0) key, is generated at the sensor manufacturer (HS),
the public key (SP1-0) of the first key pair (SP1) is transmitted from the sensor manufacturer (HS) to the central body (Z),
a range of serial numbers for sensors (SNS) is assigned to the first key pair (SP1),
a second key pair (SP2), consisting of a private (SP2-P) and a public (SP2-O) key, is generated at the central body (Z),
the public key (SP2-O) of the second key pair (SP2) is transmitted from the central body (Z) to the sensor manufacturer (HS),
the range of serial numbers for sensors (SNS) is assigned to the second key pair (SP2),
the public key (SP1-0) of the first key pair (SP1), the private key (SP2-P) of the second key pair (SP2) and the assigned range of serial numbers for sensors (SNS) are stored in the list of sensor keys (LSS) in the central body (Z),
the sensor manufacturer (HS) encrypts a transmission key (U), which is used for data transmission between the sensor (S) and a receiver (E), with the private key (SP1-P) of the first key pair (SP1) and the public key (SP2-O) of the second key pair (SP2), and stores the encrypted transmission key (U) in the sensor (S), and
the sensor manufacturer (HS) stores the private key (SP1-P) of the first key pair (SP1) and the public key (SP2-O) of the second key pair (SP2) in the sensor (S)
or
stores the transmission key (U) unencrypted.

2. Method according to Claim 1, **characterized in that** the sensor (S) has a unique ID that comprises its unique serial number, which is in the range of serial numbers for sensors (SNS), and/or
**in that** the range of serial numbers for sensors (SNS) is assigned to the sensor manufacturer (HS) by the central body (Z) in the course of a licence.

3. Method for licensing a receiver (E) at a central body (Z), comprising
the receiver (E),
the central body (Z), comprising
a computer system and a database,
a receiver manufacturer (HE), comprising a computer system, wherein
a data connection exists between the receiver manufacturer (HE) and the central body (Z),
wherein
a third key pair (SP3), consisting of a private (SP3-P) and a public (SP3-O) key, is generated at the receiver manufacturer (HE),
the public key (SP3-O) of the third key pair (SP3) is transmitted from the receiver manufacturer (HE) to the central body (Z),
a range of serial numbers for receivers (SNE) is assigned to the third key pair (SP3),
a fourth key pair (SP4), consisting of a private (SP4-P) and a public (SP4-O) key, is generated at the central body (Z),
the public key (SP4-O) of the fourth key pair (SP4) is transmitted from the central body (Z) to the receiver manufacturer (HE),
the range of serial numbers for receivers (SNE) is assigned to the fourth key pair (SP4),
the receiver manufacturer (HE) stores the private key (SP3-P) of the third key pair (SP3) and the public key (SP4-O) of the fourth key pair (SP4) in the receiver (E).

4. Method according to Claim 3, **characterized in that** a list of receiver keys (LES) is kept in the database of the central body (Z), wherein the public key (SP3-O) of the third key pair (SP3), the private key (SP4-P) of the fourth key pair (SP4) and the assigned range of serial numbers for receivers (SNE) are stored in the list of receiver keys (LES) in the central body (Z).

5. Method according to Claim 3 or 4, **characterized in that** the receiver (E) has a unique ID that comprises its unique serial number, which is in the range of serial numbers for receivers (SNE), and/or
**in that** the range of serial numbers for receivers (SNE) is assigned to the receiver manufacturer (HE) by the central body (Z) in the course of a licence.

6. Method for providing a list of sensor keys (LSS) by means of a central body (Z) by using the method according to Claim 1 or 2 and the method according to one of Claims 3 to 5, **characterized in that** the central body (Z) encrypts the list of sensor keys (LSS) with the public key (SP3-O) of the third key pair (SP3) and the private key (SP4-P) of the fourth key pair (SP4).

7. Method according to Claim 6, **characterized in that** the central body (Z) encrypts the list of sensor keys (LSS) with the public key (SP3-O) of the third key pair (SP3) and the private key (SP4-P) of the fourth key pair (SP4) of each receiver (E), the key of which is stored in the list of receiver keys (LES).

8. Method according to Claim 6 or 7, **characterized in that** the central body (Z) publishes the list of sensor keys (LSS) and/or
**in that** the list of sensor keys (LSS) is signed by a certification authority.

9. Method for registering a licensed sensor (S), the licensed sensor (S) being licensed using the method according to Claim 1 or 2, on a licensed receiver (E), the licensed receiver (E) being licensed using the method according to one of Claims 3 to 5, by involving a central body (Z), comprising
the sensor (S),
the receiver (E),
the central body (Z), comprising
a computer system and a database, wherein
a data connection exists between the sensor (S) and the receiver (E), and
a data connection exists between the receiver (E) and the central body (Z),
**characterized in that**
a list of sensor keys (LSS) according to one of Claims 6 to 8 is provided, wherein
the receiver (E) obtains the list of sensor keys (LSS) from the central body (Z),
the receiver (E) decrypts the list of sensor keys (LSS) by means of the private key (SP3-P) of the third key pair (SP3) and the public key (SP4-O) of the fourth key pair (SP4),
the sensor (S) transfers the stored encrypted transmission key (U) to the receiver (E),
the receiver (E) extracts the public key (SP1-0) of the first key pair (SP1) corresponding to the sensor (S) and the private key (SP2-P) of the second key pair (SP2) from the list of sensor keys (LSS),
the receiver (E) decrypts the encrypted transmission key (U) by means of the public key (SP1-0) of the first key pair (SP1) and the private key (SP2-P) of the second key pair (SP2).

10. Method according to Claim 9, **characterized in that** the sensor (S) sends its ID to the receiver (E), wherein the receiver (E) uses the serial number contained in the ID to extract the keys assigned to this range of serial numbers for sensors (SNS) from the list of sensor keys (LSS).

11. Method according to Claim 9 or 10, **characterized in that** the sensor (S) sends data encrypted with the transmission key (U) to the receiver, and the receiver (E) decrypts the encrypted data by means of the transmission key (U).

12. Method according to one of the preceding claims, **characterized in that** the transmission key (U) describes a symmetrical encryption method.

13. Method according to one of Claims 2 to 12, **characterized in that** the ID of the sensor (S) and/or the ID of the receiver (E) is/are a MAC address.

14. Method according to one of Claims 2 to 13, **characterized in that** the range of serial numbers for sensors (SNS) is determined from the ID or the MAC address of the sensor (S) and/or the range of serial numbers for receivers (SNE) is determined from the ID or the MAC address of the receiver (S).

15. Method according to one of the preceding claims, **characterized in that** the first key pair (SP1) and/or the second key pair (SP2) and/or the third key pair (SP3) and/or the fourth key pair (SP4) describe(s) an asymmetric encryption method.

16. Method according to one of Claims 13 to 15, **characterized in that** the MAC address and/or a part of the MAC address of the sensor (S) is/are used to generate the second key pair (SP2) and/or the MAC address and/or a part of the MAC address of the receiver (E) is/are used to generate the fourth key pair (SP4).

17. System for transmitting data from a licensed sensor (S), the system being geared to licensing the sensor (S) using the method according to Claim 1 or 2 to a licensed receiver (E), and to licensing the receiver (E) using the method according to one of Claims 3 to 5, by involving a central body (Z), comprising
the sensor (S),
the receiver (E),
the central body (Z), comprising
a computer system and a database, wherein
a data connection exists between the sensor (S) and the receiver (E), and
a data connection exists between the receiver (E) and the central body (Z),
the sensor (S) sends data encrypted with the transmission key (U) to the receiver (E),
the receiver (E) decrypts the data by means of the transmission key (U),
**characterized in that**
the transmission key (U) is transferred from the sensor (S) to the receiver (E) in the course of registration of the sensor (S) on the receiver (E), in particular registration of the sensor (S) on the receiver (E) according to at least one of Claims 9 to 11,
in particular using a method according to at least one of the preceding claims.

## Revendications

1. Procédé d'octroi de licence à un capteur (S) au niveau d'un emplacement central (Z), comprenant :
le capteur (S),
l'emplacement central (Z), comprenant
un système informatique et une base de données,
un fabricant du capteur (HS), comprenant
un système informatique, dans lequel
une connexion de données existe entre le fabricant du capteur (HS) et l'emplacement central (Z),
dans lequel
une liste de clés de capteur (LCS) est maintenue dans la base de données de l'emplacement central (Z), dans lequel une première paire de clés (SP1), constituée d'une clé privée (SP1-P) et d'une clé publique (SP1-O), est générée chez le fabricant du capteur (HS),
la clé publique (SP1-0) de la première paire de clés (SP1) est transmise du fabricant du capteur (HS) à l'emplacement central (Z),
une plage de numéros de série pour capteurs (SNS) est associée à la première paire de clés (SP1),
une deuxième paire de clés (SP2), constituée d'une clé privée (SP2-P) et d'une clé publique (SP2-O), est générée au niveau de l'emplacement central (Z),
la clé publique (SP2-O) de la deuxième paire de clés (SP2) est transmise de l'emplacement central (Z) au fabricant du capteur (HS),
la plage de numéros de série pour capteurs (SNS) est associée à la deuxième paire de clés (SP2),
la clé publique (SP1-0) de la première paire de clés (SP1), la clé privée (SP2-P) de la deuxième paire de clés (SP2) et la plage de numéros de série pour capteurs (SNS) associée sont stockées dans la liste de clés de capteur (LSS) au niveau de l'emplacement central (Z),
le fabricant du capteur (HS) crypte une clé de transmission (U), qui est utilisée pour la transmission de données entre le capteur (S) et un récepteur (E), avec la clé privée (SP1-P) de la première paire de clés (SP1) et la clé publique (SP2-O) de la deuxième paire de clés (SP2), et stocke la clé de transmission (U) cryptée dans le capteur (S), et
le fabricant du capteur (HS) stocke dans le capteur (S) la clé privée (SP1-P) de la première paire de clés (SP1) et la clé publique (SP2-O) de la deuxième paire de clés (SP2),
ou
stocke la clé de transmission (T) à l'état non crypté.

2. Procédé selon la revendication 1, **caractérisé en ce que** le capteur (S) possède un ID unique qui comprend son numéro de série unique, lequel se situe dans la plage de numéros de série pour capteurs (SNS), et/ou **en ce que** la plage de numéros de série pour capteurs (SNS) est attribuée au fabricant du capteur (HS) par l'emplacement central (Z) dans le cadre d'une licence.

3. Procédé d'octroi de licence à un récepteur (E) au niveau d'un emplacement central (Z), comprenant le récepteur (E),
l'emplacement central (Z), comprenant
un système informatique et une base de données,
un fabricant du récepteur (HE), comprenant
un système informatique, dans lequel
une connexion de données existe entre le fabricant du récepteur (HE) et l'emplacement central (Z),
dans lequel
une troisième paire de clés (SP3), constituée d'une clé privée (SP3-P) et d'une clé publique (SP3-O), est générée chez le fabricant du récepteur (HE),
la clé publique (SP3-O) de la troisième paire de clés (SP3) est transmise du fabricant du récepteur (HE) à l'emplacement central (Z),
une plage de numéros de série pour récepteurs (SNE) est associée à la troisième paire de clés (SP3),
une quatrième paire de clés (SP4), constituée d'une clé privée (SP4-P) et d'une clé publique (SP4-O), est générée au niveau de l'emplacement central (Z),
la clé publique (SP4-O) de la quatrième paire de clés (SP4) est transmise de l'emplacement central (Z) au fabricant du récepteur (HE),
une plage de numéros de série pour récepteurs (SNE) est associée à la troisième paire de clés (SP4),
le fabricant du récepteur (HE) stocke dans le récepteur (E) la clé privée (SP3-P) de la troisième paire de clés (SP3) et la clé publique (SP4-O) de la quatrième paire de clés (SP4).

4. Procédé selon la revendication 3, **caractérisé en ce qu'**une liste de clés de récepteur (LES) est maintenue dans la base de données de l'emplacement central (Z), la clé publique (SP3-O) de la troisième paire de clés (SP3), la clé privée (SP4-P) de la quatrième paire de clés (SP4) et la plage de numéros de série pour récepteurs (SNE) associée étant stockées dans la liste de clés de récepteur (LES) au niveau de l'emplacement central (Z).

5. Procédé selon la revendication 3 ou 4, **caractérisé en ce que** le récepteur (E) possède un ID unique qui comprend son numéro de série unique, lequel se situe dans la plage de numéros de série pour récepteurs (SNE), et/ou **en ce que** la plage de numéros de série pour récepteurs (SNE) est attribuée au fabricant du récepteur (HE) par l'emplacement central (Z) dans le cadre d'une licence.

6. Procédé de fourniture d'une liste de clés de capteur (LSS) par un emplacement central (Z), en utilisant le procédé selon la revendication 1 ou 2 et le procédé selon l'une des revendications 3 à 5, **caractérisé en ce que** l'emplacement central (Z) crypte la liste de clés de capteur (LSS) avec la clé publique (SP3-O) de la troisième paire de clés (SP3) et la clé privée (SP4-P) de la quatrième paire de clés (SP4).

7. Procédé selon la revendication 6, **caractérisé en ce que** l'emplacement central (Z) crypte la liste de clés de capteur (LSS) avec la clé publique (SP3-O) de la troisième paire de clés (SP3) et la clé privée (SP4-P) de la quatrième paire de clés (SP4) de chaque récepteur (E) dont la clé est stockée dans la liste de clés de récepteur (LES).

8. Procédé selon la revendication 6 ou 7, **caractérisé en ce que** l'emplacement central (Z) publie la liste de clés de capteur (LSS) et/ou
**en ce que** la liste de clés de capteur (LSS) est signée par une autorité de certification.

9. Procédé d'enregistrement d'un capteur sous licence (S), une licence étant octroyée au capteur sous licence (S) conformément au procédé selon la revendication 1 ou 2, sur un récepteur sous licence (E), une licence étant octroyée au récepteur sous licence (E) conformément au procédé selon l'une des revendications 3 à 5, en faisant intervenir un emplacement central (Z), comprenant
le capteur (S),
le récepteur (E) ;
l'emplacement central (Z), comprenant
un système informatique et une base de données, dans lequel
une connexion de données existe entre le capteur (S) et le récepteur (E), et
une connexion de données existe entre le récepteur (E) et l'emplacement central (Z),
**caractérisé en ce que**
la fourniture d'une liste de clés de capteur (LSS) s'effectue selon l'une des revendications 6 à 8, dans lequel
le récepteur (E) obtient la liste de clés de capteur (LCS) de l'emplacement central (Z),
le récepteur (E) décrypte la liste de clés de capteur (LSS) au moyen de la clé privée (SP3-P) de la troisième paire de clés (SP3) et de la clé publique (SP4-O) de la quatrième paire de clés (SP4),
le capteur (S) transmet la clé de transmission (U) cryptée stockée au récepteur (E),
le récepteur (E) extrait de la liste de clés de capteur (LSS) la clé publique (SP1-0) correspondant au capteur (S) de la première paire de clés (SP1) et la clé privée (SP2-P) de la deuxième paire de clés (SP2),
le récepteur (E) décrypte la clé de transmission (U) cryptée au moyen de la clé publique (SP1-0) de la première paire de clés (SP1) et de la clé privée (SP2-P) de la deuxième paire de clés (SP2).

10. Procédé selon la revendication 9, **caractérisé en ce que** le capteur (S) envoie son ID au récepteur (E), le récepteur (E) extrayant de la liste de clés de capteur (LCS) les clés qui sont associées à cette plage de numéros de série pour capteurs (SNS), conformément au numéro de série contenu dans l'ID.

11. Procédé selon la revendication 9 ou 10, **caractérisé en ce que** le capteur (S) envoie des données cryptées avec la clé de transmission (U) au récepteur (E), et le récepteur (E) décrypte les données cryptées au moyen de la clé de transmission (U).

12. Procédé selon l'une des revendications précédentes, **caractérisé en ce que** la clé de transmission (U) décrit un procédé de cryptage symétrique.

13. Procédé selon l'une des revendications 2 à 12, **caractérisé en ce que** l'ID du capteur (S) et/ou l'ID du récepteur (E) est une adresse MAC.

14. Procédé selon l'une des revendications 2 à 13, **caractérisé en ce que** la plage de numéros de série pour capteurs (SNS) est déterminée par l'ID ou l'adresse MAC du capteur (S) et/ou la plage de numéros de série pour récepteurs (SNE) est déterminée par l'ID ou l'adresse MAC du récepteur (S).

15. Procédé selon l'une des revendications précédentes, **caractérisé en ce que** la première paire de clés (SP1) et/ou la deuxième paire de clés (SP2) et/ou la troisième paire de clés (SP3) et/ou la quatrième paire de clés (SP4) décrit un procédé de cryptage asymétrique.

16. Procédé selon l'une des revendications 13 à 15, **caractérisé en ce que** l'adresse MAC et/ou une partie de l'adresse MAC du capteur (S) sont utilisées pour générer la deuxième paire de clés (SP2), et/ou l'adresse MAC et/ou une partie de l'adresse MAC du récepteur (E) sont utilisées pour générer la quatrième paire de clés (SP4).

17. Système de transmission de données d'un capteur sous licence (S), le système étant configuré pour octroyer une licence au capteur (S) conformément au procédé selon la revendication 1 ou 2, à un récepteur sous licence (E), et pour octroyer une licence au récepteur (E) conformément au procédé selon l'une des revendications 3 à 5, en faisant intervenir un emplacement central (Z), comprenant
le capteur (S),
le récepteur (E),
l'emplacement central (Z), comprenant
un système informatique et une base de données, dans lequel
une connexion de données existe entre le capteur (S) et le récepteur (E), et
une connexion de données existe entre le récepteur (E) et l'emplacement central (Z),
le capteur (S) envoie des données cryptées avec la clé de transmission (U) au récepteur (E),
le récepteur (E) décrypte les données au moyen de la clé de transmission (U),
**caractérisé en ce que**
la clé de transmission (U) est transmise du capteur (S) au récepteur (E), dans le cadre d'un enregistrement du capteur (S) auprès du récepteur (E), notamment d'un enregistrement du capteur (S) auprès du récepteur (E) selon au moins l'une des revendications 9 à 11,
en particulier conformément à un procédé selon au moins l'une des revendications précédentes.
